# EUROPÄISCHE PATENTANMELDUNG

(11) **EP 4 703 706 A1**
(43) Veröffentlichungstag der Anmeldung: **04.03.2026**
(21) Anmeldenummer: 25198437.3
(22) Anmeldetag: 27.08.2025
(51) Int. Cl.: G01N 3/06, G01N 3/08, G01N 3/40, G01N 33/00

(54) **VERFAHREN ZUR ÜBERPRÜFUNG EINER HÄRTEMESSUNG AN KLEINVOLUMIGEN SCHÜTTGÜTERN**

(30) Priorität: 30.08.2024 DE 102024124881
(71) Anmelder: Kraemer, Thilo, 64291 Darmstadt (DE)
(72) Erfinder: Kraemer, Thilo, 64291 Darmstadt (DE)
(74) Vertreter: Hamel, Armin

(57) **Zusammenfassung**

Die Erfindung betrifft ein Verfahren zur Überprüfung einer Härtemessung an kleinvolumigen Schüttgütern, wobei die Härtemessung in einer Bruchkammer eines Prüfgeräts durchgeführt wird. Das Prüfgerät weist eine Kamera auf, mit der der Vorgang der Härtemessung aufgenommen werden kann. Das Verfahren umfasst folgende aufeinanderfolgende Schritte:
- in einem ersten Schritt ein Schüttgut einer bestimmten Charge in der Bruchkammer des Prüfgeräts bereitgestellt wird,
- in einem zweiten Schritt eine Härtemessung an dem Schüttgut durchgeführt wird, wobei das Schüttgut zerbrochen wird, so dass ein Wert für die Härte des zumindest einen Schüttguts erhalten wird, wobei der Wert für die gemessene Härte abgespeichert wird, wobei die Kamera den Vorgang der Härtemessung aufnimmt und die erhaltene Aufnahme ebenfalls abgespeichert wird,
- in einem dritten Schritt geprüft wird, ob es sich bei dem ermittelten Wert für die Härte um einen Ausreißer handelt und
- in einem vierten Schritt anhand der Aufnahme geprüft wird, ob es sich bei dem Ausreißer um eine fehlerhafte Härtemessung handelt.

## Beschreibung

Die Erfindung betrifft ein Verfahren zur Überprüfung einer Härtemessung an kleinvolumigen Schüttgütern nach den Merkmalen des Patentanspruchs 1.

Härtemessungen an kleinvolumigen Schüttgütern werden in einer Bruchkammer eines Prüfgeräts durchgeführt. Dabei wird ein Schüttgut einer bestimmten Produktionsserie (Charge), zum Beispiel eine Tablette, ein Dragee oder ein Oblong (also ein bestimmter Schüttguttyp), in der Bruchkammer zerbrochen, wobei ein Wert für die Härte des entsprechenden Schüttguts erhalten wird. Bei dieser Härtemessung ist es wichtig, dass das Schüttgut vorher korrekt in der Bruchkammer positioniert wurde. Ist das Schüttgut nicht korrekt in der Bruchkammer ausgerichtet und wird dann an diesem Schüttgut der Bruch durchgeführt, so werden Werte für die Härte erhalten, die nicht im normalen Rahmen für das entsprechende Schüttgut liegen. Aufgrund dieses Härtewertes, der außerhalb der Toleranzen für das entsprechende Schüttgut liegt (Ausreißer), lässt sich nicht abschätzen, ob es sich nun um eine fehlerhafte Härtemessung handelt, bei der das Schüttgut vor und während des Bruchs lediglich nicht korrekt ausgerichtet war, oder um ein Schüttgut handelt, dessen Qualität nicht den Anforderungen entspricht.

Um ein Schüttgut korrekt in einer Bruchkammer auszurichten, ist aus US 5,555,768 ein Prüfgerät bekannt, das eine Bruchkammer aufweist, in der eine Kamera eingebaut ist, mit der die Härtemessung aufgenommen werden kann. Mit dieser Kamera kann die Ausrichtung des Schüttguts vor dem Bruch beobachtet werden. Ist das Schüttgut nicht optimal bzw. ausreichend gut ausgerichtet, so kann das Schüttgut besser in der Bruchkammer ausgerichtet werden, um nach dieser Ausrichtung den Bruch durchzuführen. Damit wird gewährleistet, dass das Schüttgut vor der Härtemessung stets ausreichend gut in der Bruchkammer ausgerichtet ist.

Weiterhin ist aus JP 2002365186 A ein Gerät zum Messen von Eigenschaften eines Granulats und zum Unterdrucksetzen des Granulats bekannt. Das Gerät verfügt über eine Aufzeichnungseinrichtung zum Aufzeichnen eines Bilds des unter Druck stehenden Granulats und eine Messeinrichtung zum Messen der Eigenschaften des Granulats anhand des von der Aufzeichnungseinrichtung aufgezeichneten Bilds.

Des Weiteren ist in DE 10 2018 113 220 A1 ein Verfahren zum automatischen Ermitteln von Grenzwerten von mindestens einem Parameter von kleinvolumigen Schüttgütern eines ersten Typs beschrieben, das folgende Schritte aufweist:
- in einem ersten Schritt wird ein erstes Schüttgut eines ersten Typs in einem Prüfgerät bereitgestellt;
- in einem zweiten Schritt wird ein erster Parameter des ersten Schüttguts vermessen; und
- in einem dritten Schritt wird der erste Parameter als erster Grenzwert in dem Prüfgerät hinterlegt.

Schließlich wird in EP 0 983 495 B1 ein Verfahren und eine Vorrichtung zur Durchführung einer Härteprüfung an Prüflingen, insbesondere Tabletten, beschrieben. Die Richtung, in der die Härteprüfung durch Anpressen eines Druckkolbens und eines Gegenlagers gegeneinander durchgeführt wird, wird aktiv an die Vorzugsachse des Prüflings angepasst. Dadurch können insbesondere bei asymmetrischen Prüflingen Messfehler, die durch Abweichungen in der Prüfrichtung entstehen, vermieden werden. Die Position und Orientierung des Prüflings wird mittels eines Positionsmelders erfasst. Anschließend wird die Prüfrichtung durch aktives Drehen des Druckkolbens und des Axiallagers bei stationärem Prüfstand und stationärem Prüfling auf die Vorzugsachse eingestellt.

Diese Verfahren sind zeitlich jedoch recht aufwändig, weil vor jeder Härtemessung geprüft wird, ob das Schüttgut korrekt ausgerichtet ist und, falls dies nicht der Fall ist, das Schüttgut in eine ausreichend gute Position bewegt wird.

Wünschenswert wäre es, ein weniger zeitaufwändiges Prüfverfahren bereitzustellen, bei dem festgestellt werden kann, ob fehlerhafte Härtemessungen vorliegen.

Ein solches Verfahren wird durch die Merkmale des Patentanspruchs 1 beschrieben.

Weitere vorteilhafte Ausgestaltungen der Erfindung sind jeweils Gegenstand der Unteransprüche. Diese können in technologisch sinnvollerweise miteinander kombiniert werden. Die Beschreibung charakterisiert und spezifiziert die Erfindung zusätzlich.

Die Erfindung betrifft somit ein Verfahren zur Überprüfung einer Härtemessung an kleinvolumigen Schüttgütern, wobei die Härtemessung in einer Bruchkammer eines Prüfgeräts durchgeführt wird. Die Bruchkammer umfasst eine Festbacke und eine Pressbacke, wobei die Pressbacke in Richtung der Festbacke bewegt werden kann. Befindet sich zwischen der Festbacke und eine Pressbacke ein Schüttgut, so wird dieses bei der Bewegung der Pressbacke hin zur Festbacke zerbrochen. Mittels eines Kraftsensors, beispielsweise eine Kraftmessdose, wird die Kraft gemessen, die erforderlich ist, das Schüttgut zu zerbrechen. Über diese Kraft wird dann die Härte des Schüttguts ermittelt.

Das Prüfgerät weist eine Kamera auf, mit der der Vorgang der Härtemessung - und hier insbesondere der Zeitpunkt, an dem das Schüttgut in einer Bruchkammer des Prüfgeräts zerbrochen wird, d.h. der Bruch durchgeführt wird, - aufnehmbar ist. Diese Kamera ist in der Bruchkammer angeordnet.

In einem ersten Schritt wird ein Schüttgut einer ersten Charge (und damit eines bestimmten Schüttguttyps) in der Bruchkammer eines Prüfgeräts bereitgestellt. An diesem Schüttgut wird in einem zweiten Schritt eine Härtemessung durchgeführt, wobei ein Wert für die gemessene Härte erhalten wird. Dieser der Wert für die gemessene Härte wird abgespeichert. Die Kamera nimmt den Vorgang der Härtemessung auf, wobei die erhaltene Aufnahme ebenfalls abgespeichert wird. Vorzugsweise handelt es sich bei der Aufnahme um eine Filmaufnahme (Videosequenz) der Härtemessung, wobei es auch denkbar ist, dass die Aufnahme aus mehreren Bildern besteht, die nacheinander aufgenommen werden und den Bruchvorgang dokumentieren. Danach wird in einem dritten Schritt geprüft, ob es sich bei dem ermittelten Wert für die Härte um einen Ausreißer handelt. Um einen Ausreißer handelt es sich dann, wenn der ermittelte Wert für die Härte außerhalb der Toleranzen liegt. Diese Toleranzen sind für einen jeden Schüttguttyp in Form von Grenzwerten hinterlegt.

Liegt kein Ausreißer vor, werden die Aufnahmen des Bruchtests wieder gelöscht, und es werden nur die Aufnahmen im Speicher behalten, die auf einen Ausreißer hindeuten.

Vorteilhaft bei diesem Verfahren ist somit, dass dieses sehr schnell ist, weil nicht vor jeder Härtemessung geprüft werden muss, ob das Schüttgut korrekt ausgerichtet ist. Vielmehr wird anhand des erhaltenen Werts für die Härte geprüft, ob es sich um einen Ausreißer handelt oder nicht.

Handelt es sich nicht um einen Ausreißer, so kann die erste Charge frei gegeben werden. Handelt es sich hingegen um einen Ausreißer, so wird in einem vierten Schritt anhand der Aufnahme des Bruchvorgangs des entsprechenden Schüttguts geprüft, ob der erhaltene Wert für die Härte an der schlechten Qualität des Schüttguts lag oder ob das Schüttgut lediglich falsch in der Bruchkammer ausgerichtet war. War das Schüttgut lediglich falsch ausgerichtet, so kann diese Charge trotzdem freigegeben werden. Die Produktion des Schüttguts dieser Charge kann dann weiterlaufen und die bereits produzierten Schüttgüter müssen nicht verworfen werden.

In einer bevorzugten Ausführungsform wird nach dem zweiten Schritt die Bruchkammer gereinigt. Damit wird die Bruchkammer von Resten des zerbrochenen Schüttguts und von Staub befreit. Dadurch wird verhindert, dass Verunreinigungen vorhanden sind, die den Messwert eines Schüttguts, das anschließend in die Bruchkammer eingebracht und dort vermessen wird, verfälschen.

Nachdem die Bruchkammer gereinigt wurde, kann zumindest ein weiteres Schüttgut der gleichen Charge, das heißt der ersten Charge, in die Bruchammer eingebracht werden. Anschließend wird für das zumindest eine weitere Schüttgut der zweite Schritt wiederholt. Es wird somit die Härtemessung durchgeführt, und erst nachdem das zumindest eine weitere Schüttgut vermessen wurde, die Schritte Drei und Vier durchgeführt. Dies hat den Vorteil, dass eine Vielzahl an Schüttgütern hintereinander vermessen werden kann (Messserie), und erst nachdem diese Schüttgüter vermessen wurden, überprüft wird, ob überhaupt Ausreißer vorhanden sind und falls ja, ob die Ausreißer einer fehlerhaften Härtemessung zuzuordnen sind. Bei denjenigen Schüttgütern, bei denen der Ausreißer auf eine schlechte Qualität der Schüttgüter zurückzuführen ist, wird die Charge, aus denen sie stammen, verworfen. Voreilhafterweise führt diese Überprüfung und Auswertung ein externer Rechner, zum Beispiel ein PC, durch, wobei es auch möglich ist, dass die Überprüfung und Auswertung im Prüfgerät stattfinden, nämlich insbesondere dann, wenn die Messwerte und Aufnahmen ausschließlich im Prüfgerät abgespeichert werden und die Grenzwerte für die Härte des entsprechenden Schüttguttyps (Toleranzen) auch in dem Prüfgerät hinterlegt sind. Fehlerhaft sind die Härtemessungen also nur dann, wenn die Ausreißer auf eine schlechte Qualität der Schüttgüter zurückzuführen sind, nicht jedoch, wenn die Schüttgüter lediglich nicht korrekt in der Bruchkammer ausgerichtet sind.

Dadurch, dass in einer Messserie gleich mehrere Schüttgüter hintereinander vermessen werden können, ohne dass diese Schüttgüter korrekt in der Buchkammer ausgerichtet sein müssen, und erst nach der Härtemessung, d.h. erst nach Vermessung aller Schüttgüter, überprüft wird, ob Ausreißer vorhanden sind, kann das Testverfahren ohne zeitliche Verzögerung durchgeführt werden.

Vorteilhafterweise können die Messwerte sowie die durch die Kamera erhaltenen Aufnahmen in dem Prüfgerät und/oder extern, zum Beispiel an einem mit dem Prüfgerät verbundenen Rechner, abgespeichert werden. Um Speicherplatz zu sparen, bleiben vorzugsweise nur diejenigen Aufnahmen abgespeichert, bei denen ein Ausreißer vorliegt, weil nur diese Aufnahmen relevant sind; die anderen Aufnahmen können gelöscht werden, nachdem festgestellt wurde, dass kein Ausreißer vorliegt.

Wurde ein Ausreißer aufgenommen, so wird anhand der Aufnahme geprüft, ob die Messung nur fehlerhaft war, weil das Schüttgut nicht korrekt in der Bruchkammer ausgerichtet war. Liegen in der Messeserie keine Ausreißer vor, die auf eine schlechte Qualität hinweisen, wird die Charge nicht verworfen. Wurde hingegen festgestellt, dass bei einem der Ausreißer das Schüttgut korrekt ausgerichtet war, so lässt dies auf die schlechte Qualität des Schüttguts schließen. In diesem Fall wird die Charge verworfen.

Nachdem das zumindest eine Schüttgut der ersten Charge vermessen wurde und die Härtemessung geprüft wurde, kann ein Schüttgut einer anderen Charge vermessen und die Messwerte für die Härte geprüft werden.

Das Schüttgut kann zum Beispiel eine Tablette, ein Dragee oder ein Oblong sein, wobei es sich beispielsweise um ein pharmazeutisches Produkt oder um ein Nahrungsergänzungsmittel handeln kann.

Während wenigstens eine exemplarische Ausführungsform in der Beschreibung dargestellt worden ist, sollte verstanden und festgehalten werden, dass eine große Anzahl von Variationen bzw. Modifikationen dazu existieren. Es sollte auch festgehalten werden, dass die exemplarische Ausführungsform oder die exemplarischen Ausführungsformen nur Beispiele sind und nicht dazu gedacht sind, den Schutzumfang, die Anwendbarkeit oder den Aufbau der erfindungsgemäßen Einrichtung in irgendeiner Weise zu begrenzen. Vielmehr gibt die Beschreibung dem Fachmann eine hinreichende und leicht verständliche Anweisung zur Implementierung von wenigsten einer exemplarischen Ausführungsform. Dabei sollte verstanden werden, dass vielfältige und verschiedenartige Änderungen dieser Ausführungsform bezüglich der Funktion und der Anordnung der in einer exemplarischen Ausführungsform beschriebenen Elemente ausgeführt werden können, ohne von dem durch die beigefügten Patentansprüche und deren gesetzlichen Äquivalente definierten Schutzumfang abzuweichen.

## Patentansprüche

1. Verfahren zur Überprüfung einer Härtemessung an kleinvolumigen Schüttgütern, wobei die Härtemessung in einer Bruchkammer eines Prüfgeräts durchgeführt wird, wobei das Prüfgerät eine Kamera aufweist, mit der der Vorgang der Härtemessung aufnehmbar ist, wobei
a) in einem ersten Schritt ein Schüttgut einer ersten Charge in der Bruchkammer des Prüfgeräts bereitgestellt wird;
b) in einem zweiten Schritt eine Härtemessung an dem Schüttgut durchgeführt wird, wobei das Schüttgut zerbrochen wird, so dass ein Wert für die Härte des Schüttguts erhalten wird, wobei der Wert für die gemessene Härte abgespeichert wird, wobei die Kamera den Vorgang dieser Härtemessung aufnimmt und die erhaltene Aufnahme ebenfalls abgespeichert wird,
c) in einem dritten Schritt geprüft wird, ob es sich bei dem ermittelten Wert für die Härte um einen Ausreißer handelt und
d) in einem vierten Schritt anhand der Aufnahme des Ausreißers geprüft wird, ob es sich bei dem Ausreißer um eine fehlerhafte Härtemessung handelt, wobei es sich dann um eine fehlerhafte Härtemessung handelt, wenn der ermittelte Wert für die Härte an der schlechten Qualität des entsprechenden Schüttguts liegt.

2. Verfahren nach Anspruch 1, **dadurch gekennzeichnet, dass** die erste Charge verworfen wird, wenn der ermittelte Wert für die Härte an der schlechten Qualität des entsprechenden Schüttguts liegt und dass die erste Charge freigegeben wird, wenn der ermittelte Wert für die Härte an einer nicht korrekten Ausrichtung des Schüttguts in der Bruchkammer liegt.

3. Verfahren nach Anspruch 1, **dadurch gekennzeichnet, dass** nach dem Schritt b) die Bruchkammer gereinigt wird.

4. Verfahren nach Anspruch 3, **dadurch gekennzeichnet, dass** nachdem die Bruchkammer gereinigt wurde, zumindest ein weiteres Schüttgut der ersten Charge in der Bruchammer bereitgestellt wird, wobei für das zumindest eine weitere Schüttgut der Schritt b) wiederholt wird und erst nachdem dieses zumindest eine weitere Schüttgut vermessen wurde, die Schritte c) und d) durchgeführt werden.

5. Prüfgerät zum Durchführen des Verfahrens nach den Patentansprüchen 1 bis 4.
